# EUROPÄISCHE PATENTSCHRIFT

(11) **EP 0 813 007 B1**
(45) Veröffentlichungstag und Bekanntmachung des Hinweises auf die Patenterteilung: **16.08.2000**
(21) Anmeldenummer: 97108854.7
(22) Anmeldetag: 03.06.1997
(51) Int. Cl.: F16J 15/08, F16L 19/02

(54) **Dichtungsring für axial gegeneinander zu verspannende Teile**
Sealing ring for parts axially clamped together
Bague d'étanchéité pour pièces serrées axialement

(30) Priorität: 04.06.1996 DE 19622384
(43) Veröffentlichungstag der Anmeldung: 17.12.1997
(73) Patentinhaber: Klinger AG, CH-6304 Zug (CH)
(72) Erfinder: Pflug, Herwig, Dipl.-Ing., 65529 Waldems (DE)
(74) Vertreter: Sparing - Röhl - Henseler Patentanwälte

(56) Entgegenhaltungen:
- EP-A- 0 384 741
- US-A- 4 819 973
- US-A- 5 423 580
- PATENT ABSTRACTS OF JAPAN vol. 11, no. 21 (M-555) [2468] , 21.Januar 1987 & JP 61 192971 A (HAMAMATSU), 21.August 1986,
- PATENT ABSTRACTS OF JAPAN vol. 15, no. 317 (C-0858), 13.August 1991 & JP 03 119089 A (AOKI), 21.Mai 1991,

## Beschreibung

Die Erfindung betrifft einen Dichtungsring für axial gegeneinander zu verspannende Teile.

Dichtungsringe für einander gegenüberliegende, gegeneinander zu verspannende Dichtflächen wie durch Verschraubung zu verbindende, Rohrabschnitte od. dgl. sind vielfältig bekannt und in Werks- oder DIN-Normen festgeschrieben, in denen Innen-, Außendurchmesser, Dicke und Werkstoff für den jeweiligen Anwendungsfall bestimmt sind.

Hierbei ist eine relativ große Dicke der Dichtringe notwendig, damit diese nicht durch Hereinrutschen in Gewindegänge oder Freistiche dezentriert werden und dadurch in den mediumführenden Durchgang ragen. Dies führt aber gewöhnlich zu ungünstigen und damit unerwünschten Verhältnissen von gepreßter Breite des Dichtungsrings zu seiner Dicke. Bei gegeneinander zu verdrehenden Teilen ist dies besonders kritisch, zumal hierbei die zu dichtenden Flächen in ihrer Endlage gewöhnlich keinen zueinander parallelen oder sich ganz überdeckenden Endzustand erreichen, so daß der Dichtring während der gesamten Betriebszeit diese Unzulänglichkeit kompensieren muß.

Aufgabe der Erfindung ist es, einen Dichtungsring für axial über Gewinde gegeneinander zu verspannende Teile zu schraffen, der trotz dünnwandigen Ausgangsmaterials eine ausreichende Wirkdicke besitzt, um selbstzentrierend zu sein, und der es erlaubt, die gegeneinander zu verspannenden Teile unter Spannung gegeneinander zu verdrehen.

Diese Aufgabe wird entsprechend Anspruch 1 gelöst.

Dadurch, daß der Dichtungsring aus einem dünnen Blechring mit einer Blechstärke von beispielsweise 0,1 bis 1 mm gebildet wird, der mit einer entsprechenden Wellung versehen ist, ergibt sich einerseits eine ausreichende Wirkdicke, die zu einer Selbstzentrierung des Dichtungsrings führt, und andererseits wird ein günstiges Verhältnis von gepreßter Breite des Dichtungsrings zu seiner Dicke erhalten, während die ein- oder beidseitige Mikroabdichtungsbeschichtung, insbesondere in Form einer Elastomerbeschichtung, dient und die zumindest einseitige Gleitbeschichtung es ermöglicht, die zu verspannenden Teile gegeneinander zu verdrehen bzw. den Dichtungsring einzusetzen, wenn durch eine Drehbewegung ein Anziehen miteinander zu verschraubender Teile unter Zwischenschaltung des Dichtungsrings vorgenommen wird, bzw. nach einem Vorspannen die zu verspannenden Teile zum Ausrichten gegeneinander bewegt werden. Wenn eine einseitige Mikroabdichtunsbeschichtung vorgesehen ist, wird zumindest auf der Gegenseite eine Gleitbeschichtung angebracht.

Hierbei ist der gewellte Blechring praktisch faltenfrei rückverformbar, indem er durch die Wellung nur eine geringe plastische Verformung erfahren hat.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.

Fig. 1 und 2 zeigen eine Ausführungsform eines Dichtungsrings perspektivisch und in Seitenansicht.

Fig. 3 und 4 zeigen schematisiert den Dichtungsring der Fig. 1 und 2 beim Einbau.

Fig. 5 zeigt eine weitere Ausführungsform eines Dichtungsrings in perspektivischer Ansicht.

Fig. 6 bis 8 zeigen im Schnitt Varianten der Ausführungsform von Fig. 5.

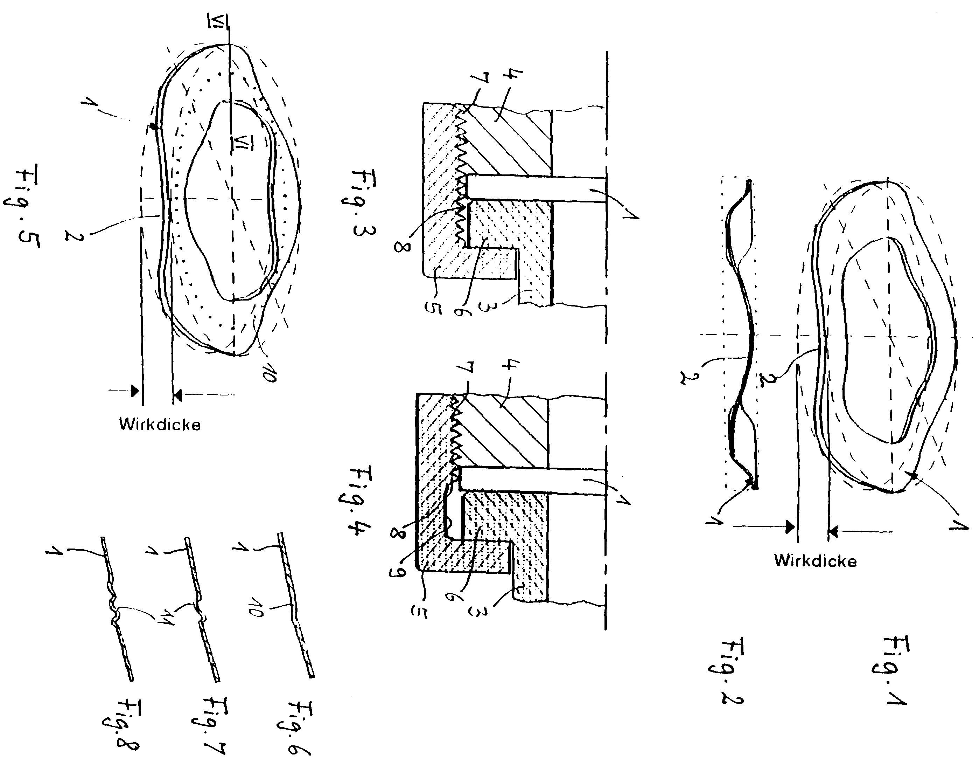

Der in Fig. 1 und 2 dargestellte Dichtungsring wird aus einem Blechring 1 gebildet, der in Umfangsrichtung umlaufend mit Wellen 2 versehen ist, so daß sich zwei Paare von jeweils gegenüberliegenden Bergen sowie Tälern ergeben. Durch diese Wellung wird die gegenüber der Blechdicke erheblich vergrößerte Wirkdicke auf einen vorbestimmten Wert eingestellt.

Der Blechring 1 ist ein- oder beidseitig mit einer Elastomerbeschichtung für die Mikroabdichtung (nicht dargestellt) versehen. Über die Schichtdicke der Elastomerbeschichtung, die üblicherweise zwischen 5 und 400 µm liegt, lassen sich besondere Rauhigkeits- und/oder Betriebsbedingungen berücksichtigen.

Als Material für den Blechring 1 kommen beispielsweise ferritische oder austenitische Stähle, und zwar weich oder als Federstähle, infrage. Der Blechring 1 wird aus entsprechendem, gegebenenfalls bereits beschichtetem Bandmaterial insbesondere unter gleichzeitiger Formgebung ausgestanzt.

Bei dem in Fig. 3 dargestellten Anwendungsbeispiel werden zwei rohrförmige Bauteile 3, 4 miteinander über eine Überwurfmutter 5 verspannt. Hierzu trägt das rohrförmige Bauteil 3 einen Flansch 6, an dem die überwurfmutter 5 zur Anlage kommt, und das rohrförmige Bauteil 4 ein Außengewinde 7, auf das die Überwurfmutter 5 aufgeschraubt wird. Das Innengewinde 8 der überwurfmutter 5 erstreckt sich dabei über die Länge von deren Innenbohrung. Der zwischen den stirnseitigen Dichtflächen der beiden rohrförmigen Bauteile 3, 4 angeordnete, beidseitig beschichtete Blechring 1 kann aufgrund seiner relativ großen Wirkdicke nicht in die Gewindegänge der Überwurfmutter 5 rutschen und so dezentriert werden, vielmehr ist er aufgrund seiner großen Wirkdicke selbstzentrierend. Durch Anziehen der überwurfmutter 5 wird der Blechring 1 flach gedrückt und gelangt an den Dichtflächen der beiden rohrförmigen Bauteile 3, 4 in dichtende Anlage, wobei er sich an die gegenüberliegenden Dichtflächen anpaßt, selbst wenn diese sich nicht vollständig überdecken oder nicht ganz parallel zueinander stehen. Er besitzt eine vorbestimmte Rückstellelastizität.

Der Dichtungsring ist zumindest einseitig mit einer Gleitschicht versehen, die beispielsweise durch eine zusätzliche, dünne Beschichtung etwa auf PTFE-, Talkum-, Graphit-, Glimmer-Basis, MoS₂ od. dgl. gebildet wird. Diese Gleitschicht ermöglicht ein Ausrichten der Bauteile durch Gegeneinanderverdrehen und die dabei aufgrund der Gleitbeschichtung auftretenden Gleitvorgänge.

Gemäß Fig. 4 ist das Innengewinde 8 der Überwurfmutter 5 am innenseitigen Ende durch einen Freistich 9 begrenzt, der bei einem zu dünnen Dichtungsring dazu führen würde, daß er dezentriert und in den Strömungsdurchgang für das zu führende Medium ragen würde. Durch die ausreichende Wirkdicke des gewellten Dichtungsrings wird dieser jedoch von sich aus zentriert.

Bei der in Fig. 5 dargestellten Ausführungsform ist bei dem Dichtungsring der in Umfangsrichtung umlaufenden Wellung eine sich entsprechend ändernde Neigung in Radialrichtung überlagert, so daß im mittleren Bereich gegebenenfalls ein schmaler umlaufender Ringbereich 10 (in Fig, 5 durch voneinander beabstandete Quadrate markiert, vgl. aber auch Fig. 6, die einen Schnitt von Fig. 5 entlang der Linie VI-VI darstellt) in der Ebene des Blechrohlings bzw. des Blechs, aus dem dieser gestanzt wird, verbleibt, während die Neigung derart in ihrer Richtung gegenüber der Radialebene des Blechrings 1 wechselt, daß dann, wenn am Außenumfang ein Wellenberg ist, sich am Innenumfang ein Wellental befindet, und umgekehrt. Die Anzahl der Wellentäler und -berge kann auch mehr als zwei-Paare umfassen, auch kann die Wellung 2 am Innen- und Außenumfang des Blechrings 1 auch unterschiedlich sein bzw. kann eine Wellung auch nur auf einem Außen- oder Innenumfangsbereich vorgesehen sein. Auch kann die Wellung eine um einen Fixpunkt auf der Achse des Dichtungsrings pendelnde, axiale Verformung darstellen. Wellungen entlang des Innen- und Aussenrandes können durch sich in Umfangsrichtung erstreckende Einschnitte zur Mitte des Dichtungsrings hin begrenzt sein.

Im Bereich des schmalen, umlaufenden Ringbereichs 10 kann, wie aus Fig. 7 und 8 ersichtlich ist, eine umlaufende Prägung insbesondere in Form einer umlaufenden Sickung 11 vorgesehen sein, die die gesamte Breite des Ringbereichs 10 einnehmen kann. über eine derartige oder auch als sonstige Prägung ausgeführte Verformung des Ringbereichs 10 lassen sich Winkelabweichungen der Dichtflächen der Bauteile 3, 4 berücksichtigen. Die Verformung etwa in Form der Sickung 11 kann auch in einem gewellten Ringbereich 10 vorgesehen sein, in welchem Fall der Ringbereich 10 nicht in der Ebene des Blechrohlings bzw. Blechs liegt und sich nahezu über die gesamte Breite des Dichtungsrings erstrecken kann.

Der Dichtungsring kann auch mit zunächst stark überhöhter Wellung, die größer als die vorgesehene Wirkdicke ist, hergestellt werden, um dann durch Rückverformung dieser Überhöhung auf die Wirkdicke den Dichtungsring an einem der miteinander zu verbindenden Bauteile (z.B. an der überwurfmutter) als unverlierbares Teil zu fixieren, etwa indem eine Fixierung am Innendurchmesser oder im Gewinde oder im Freistich erfolgt. Diese Fixierung kann beispielsweise durch Klemmen, definierte Unrundheit, Auffederung in einer Nut erfolgen.

## Patentansprüche

1. Dichtungsring für axial über Gewinde gegeneinander zu verspannende Teile (3, 4) aus einem dünnen, in Axialrichtung durch eine Wellung (2) auf eine vorbestimmte Wirkdicke gebrachten Blechring (1), der ein- oder beidseitig mit einer dünnen Mikroabdichtungsbeschichtung und zumindest einseitig, bei einseitiger Mikroabdichtungsbeschichtung auf der Gegenseite, mit einer Gleitbeschichtung versehen ist.

2. Dichtungsring nach Anspruch 1, dadurch gekennzeichnet, daß die Mikroabdichtungsbeschichtung, insbesondere eine Elastomerbeschichtung, eine Dicke von etwa 5 bis 400 µm aufweist.

3. Dichtungsring nach Anspruch 1 oder 2, dadurch gekennzeichnet, daß der Blechring (1) eine in Umfangsrichtung umlaufende Wellung (2) aufweist.

4. Dichtungsring nach Anspruch 3, dadurch gekennzeichnet, daß die Wellung (2) eine um einen Fixpunkt auf der Achse des Dichtungsrings pendelnde, axiale Verformung ist.

5. Dichtungsring nach einem der Ansprüche 1 bis 3, dadurch gekennzeichnet, daß sich die Wellung (2) über einen Außen- und/oder Innenrandbereich des Blechrings (1) erstreckt.

6. Dichtungsring nach einem der Ansprüche 3 bis 5, dadurch gekennzeichnet, daß der in Umfangsrichtung umlaufenden Wellung (2) eine sich in Umfangsrichtung wellenförmig ändernde Neigung in Radialrichtung überlagert ist.

7. Dichtungsring nach Anspruch 5 oder 6, dadurch gekennzeichnet, daß der Blechring (1) einen sich in der Ebene eines unverformten Blechringrohlings befindlichen Ringbereich (10) aufweist, beidseitig von dem jeweils eine Wellung (2) angeordnet ist.

8. Dichtungsring nach einem der Ansprüche 1 bis 7, dadurch gekennzeichnet, daß ein mittlerer Ringbereich (10) mit einer umlaufenden Verformung, die insbesondere als Sickung (11) ausgebildet ist, versehen ist.

## Claims

1. Sealing ring for parts (3, 4) to be braced axially one against the other by way of screw threads, consisting of a thin sheet metal ring (1) given a predetermined working thickness in the axial direction by an undulation (2), which ring (1) is provided on one or both sides with a thin micro-sealing coating and at least on one side, in the case of a unilateral micro-sealing coating, on the opposite side with a sliding coating.

2. Sealing ring according to Claim 1, characterised in that the micro-sealing coating, in particular an elastomer coating, has a thickness of approximately 5 to 400 µm.

3. Sealing ring according to Claim 1 or 2, characterised in that the sheet metal ring (1) has an undulation (2) running in the peripheral direction.

4. Sealing ring according to Claim 3, characterised in that the undulation (2) is an axial deformation oscillating about a fixed point on the axis of the sealing ring.

5. Sealing ring according to one of Claims 1 to 3, characterised in that the undulation (2) extends over an outer and/or inner edge region of the sheet metal ring (1).

6. Sealing ring according to one of Claims 3 to 5, characterised in that superimposed on the undulation (2) running in the peripheral direction is an inclination in the radial direction varying in the manner of a wave in the peripheral direction.

7. Sealing ring according to Claim 5 or 6, characterised in that the sheet metal ring (1) has an annular region (10) located in the plane of an un-deformed sheet metal ring blank, on both sides of which an undulation (2) is respectively located.

8. Sealing ring according to one of Claims 1 to 7, characterised in that a central annular region (10) is provided with a circulating deformation, which in particular is constructed as a corrugation (11).

## Revendications

1. Bague d'étanchéité pour pièces (3, 4) qu'il s'agit de serrer axialement l'une contre l'autre au moyen de filetages, composée d'un anneau de tôle mince (1) mis à une épaisseur effective prédéterminée dans la direction axiale par une ondulation (2), et qui est muni, sur une face ou sur les deux faces, d'un revêtement mince de micro-étanchéité, et, dans le cas d'un revêtement de micro-étanchéité sur une seule face, est muni d'un revêtement de glissement sur au moins une face, sur la face opposée.

2. Bague d'étanchéité selon la revendication 1, caractérisée en ce que le revêtement de micro-étanchéité, en particulier un revêtement d'élastomère, présente une épaisseur d'environ 5 à 400 µm.

3. Bague d'étanchéité selon la revendication 1 ou 2, caractérisée en ce que l'anneau de tôle (1) présente une ondulation (2) s'étendant dans la direction circonférentielle.

4. Bague d'étanchéité selon la revendication 3, caractérisée en ce que l'ondulation (2) est une déformation axiale qui oscille autour d'un point fixe situé sur l'axe de la bague d'étanchéité.

5. Bague d'étanchéité selon une des revendications 1 à 3, caractérisée en ce que l'ondulation (2) s'étend sur une région de bord extérieur et/ou de bord intérieur de l'anneau de tôle (1).

6. Bague d'étanchéité selon une des revendications 3 à 5, caractérisée en ce qu'à l'ondulation (2) s'étendant dans la direction circonférentielle, est superposée une inclinaison dans la direction radiale qui varie de façon ondulée dans la direction circonférentielle.

7. Bague d'étanchéité selon la revendication 5 ou 6, caractérisée en ce que l'anneau de tôle (1) présente une région d'anneau (10) qui se trouve dans le plan d'une ébauche d'anneau de tôle non déformée et de chaque côté de laquelle est formée une ondulation (2).

8. Bague d'étanchéité selon une des revendications 1 à 7, caractérisée en ce qu'une région médiane (10) de l'anneau est munie d'une déformation qui est constituée en particulier par une moulure (11).
